# EUROPÄISCHE PATENTANMELDUNG

(11) **EP 1 533 278 A2**
(43) Veröffentlichungstag der Anmeldung: **25.05.2005**
(21) Anmeldenummer: 04027377.3
(22) Anmeldetag: 18.11.2004
(51) Int. Cl.: C02F 3/04

(54) **Biologische Kläranlage mit Tropfkörper**

(30) Priorität: 19.11.2003 DE 20317907 U
(71) Anmelder: Hörster Betonwerk GmbH, 33790 Halle/Westfalen (DE)
(72) Erfinder: Habighorst, Stefan, 48231 Warendorf (DE)
(74) Vertreter: TER MEER STEINMEISTER & PARTNER GbR

(57) **Zusammenfassung**

Biologische Kläranlage mit wenigstens einem Klärbehälter (10) und einem stromabwärts eines als Überlauf ausgebildeten Auslasses (44) des Klärbehälters (10) angeordneten Tropfkörperbehälter (12), der einen Tropfkörper (50) sowie eine Pumpe (62) enthält, die das zu klärende Abwasser vom Sumpf (60) des Tropfkörperbehälters (12) zurückführt, teilweise einem Auslaß zuführt, dadurch **gekennzeichnet,** dass der Auslaß (44) des Klärbehälters über eine Leitung (80) mit einem Einlaß (82) im Bereich des Sumpfes (60) des Tropfkörperbehälters verbunden ist.

## Beschreibung

Die Erfindung betrifft eine biologische Kläranlage mit wenigstens einem Klärbehälter und einem stromabwärts eines als Überlauf ausgebildeten Auslasses des Klärbehälters angeordneten Tropfkörperbehälter, der einen Tropfkörper sowie eine Pumpe enthält, die das zu klärende Abwasser vom Sumpf des Tropfkörperbehälters zum oberen Bereich des Tropfkörpers anhebt und wenigstens teilweise auf den Tropfkörper zurückführt, teilweise einem Auslaß zuführt.

Bei derartigen Kläranlagen wird das im Klärbehälter behandelte Abwasser von dessen im oberen Bereich angeordnetem Auslaß, der als Überlauf ausgebildet ist, durch ein Rohr in einen Einlaß im oberen Bereich des nachgeschalteten Tropfkörperbehälters geleitet und hier von oben auf dem Tropfkörper verrieselt. Da sich das Wasser vom Klärbehälter zum Tropfkörperbehälter mit natürlichem Gefälle bewegen muß, bedeutet diese Anordnung, dass der Tropfkörperbehälter im Erdboden in der Regel etwas tiefer angeordnet werden muß als der Klärbehälter. Da andererseits die Einbautiefe des Klärbehälters von der Höhe des Zulaufs abhängt, der im oberen Bereich in den Klärbehälter eintritt, kann es notwendig sein, den Klärbehälter relativ tief und den Tropfkörperbehälter noch tiefer einzubauen. Das erfordert relativ aufwendige Erdarbeiten, und auch die laufenden Wartungsarbeiten werden erschwert, zumal vielfach über dem Dom der beiden Behälter ein zusätzlicher Schacht errichtet werden muß. Nachteilig ist auch, dass der Auslaß des Tropfkörperbehälters entsprechend tief liegt, so dass das Abwasser unter Umständen nur mit Hilfe einer weiteren Pumpe in den nächstgelegenen Vorfluter überführt werden kann.

Der Erfindung liegt daher die Aufgabe zugrunde, eine biologische Kläranlage zu schaffen, die es gestattet, zumindest den Tropfkörperbehälter auch bei tief liegendem Zulauf in einer oberflächennahen Position anzuordnen.

Zur Lösung dieser Aufgabe ist die biologische Kläranlage der obigen Art dadurch gekennzeichnet, dass der Auslaß des Klärbehälters über eine Leitung mit einem Einlaß im Bereich des Sumpfes des Tropfkörperbehälters verbunden ist.

Da der Auslaß des Klärbehälters direkt mit dem Sumpf des Tropfkörperbehälters verbunden ist, kann der Tropfkörperbehälter erheblich höher angeordnet werden, als der Klärbehälter.

Der Kerngedanke der Erfindung, das im Klärbehälter geklärte Abwasser nicht in den oberen Bereich, sondern in den unteren Bereich des Tropfkörperbehälters einzuleiten, hat zur Folge, dass ein bestimmter Anteil des aus dem Klärbehälter eintreffenden Abwassers durch den Auslaß des Tropfkörperbehälters in den Vorfluter übergeben wird, ohne dass dieser Anteil des Abwassers einen Tropfkörper passiert hat. Im Sumpf des Tropfkörperbehälters wird das zuströmende Abwasser jedoch mit dem über die Tropfkörper herabrieselnden, sehr sauerstoffreichen Abwasser vermischt, so dass sich durch die Einmischung des zuströmenden Abwassers keine entscheidenden Nachteile ergeben.

Ein erfindungsgemäßes Verfahren zur Herstellung einer biologischen Kläranlage mit wenigstens einem Klärbehälter und einem stromabwärts eines als Überlauf ausgebildeten Auslasses des Klärbehälters angeordneten Tropfkörperbehälter, der einen Tropfkörper sowie eine Pumpe enthält, die das zu klärende Abwasser vom Sumpf des Tropfkörperbehälters zum oberen Bereich des Tropfkörperbehälters anhebt und wenigstens teilweise auf den Tropfkörper zurückführt, teilweise einem Auslaß zuführt, ist dadurch gekennzeichnet, dass der untere Bereich des Tropfkörperbehälters in Höhe des oberen Bereichs des Klärbehälters angeordnet wird, und dass der Auslaß des Klärbehälters mit dem Sumpf des Tropfkörperbehälters durch eine Rohrleitung verbunden wird.

Im folgenden werden bevorzugte Ausführungsbeispiele der Erfindung anhand der beigefügten Zeichnung näher erläutert.
- Fig. 1: zeigt einen senkrechten Schnitt durch eine verbundene Anordnung aus Klärbehälter und Tropfkörperbehälter;
- Fig. 2: zeigt eine teilweise geschnittene Draufsicht auf diese Anordnung.

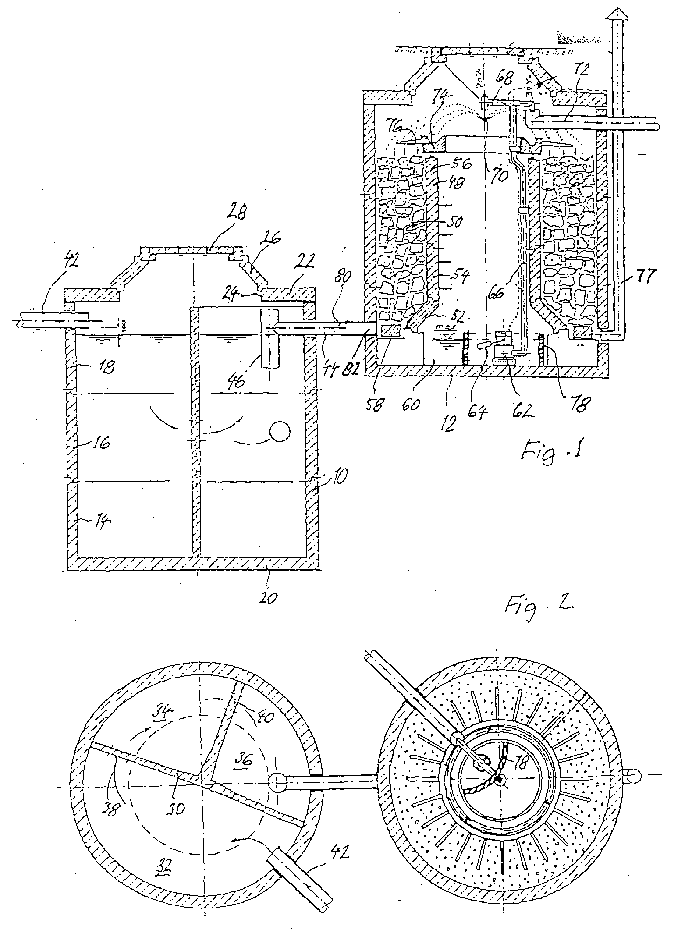

In den Figuren 1 und 2 sind ein Klärbehälter 10 und ein Tropfkörperbehälter 12 dargestellt, die in der genannten Reihenfolge miteinander verbunden sind. Beide Behälter bestehen aus aufeinandergesetzten Betonringen 14,16,18, deren unterer einen Boden 20 aufweist. Ein oberer Deckel 22 weist eine zentrale, kreisförmige Öffnung 24 auf, auf der sich ein Dom 26 befindet, dessen zentrale Öffnung durch einen weiteren Deckel 28 verschlossen ist. Insoweit stimmen beide Behälter überein.

Der in der Zeichnung gezeigte Aufbau der beiden Behälter 10,12 aus Betonringen stellt naturgemäß kein zwingendes Merkmal dar. Vielmehr können die Behälter auch aus anderen Materialien, etwa Kunststoff oder Blech bestehen. Der Behälter kann auch einstückig ausgebildet sein. Er kann auch eine erheblich andere Form aufweisen, als sie in der Zeichnung gezeigt ist.

Zum Verständnis der Erfindung ist darauf hinzuweisen, dass in Fig. 2 die Elemente der beiden Behälter teilweise in anderen Winkelstellungen gezeigt sind, als es nach Anspruch 1 anzunehmen wäre.

Der Klärbehälter 10 ist im übrigen als Dreikammerbehälter ausgebildet und weist eine im Querschnitt T-förmige Trennwandanordnung 30 auf, die das Innere des Klärbehälters 10 in eine Absetzkammer 32, die etwa die Hälfte des Behälterraums einnimmt, und in zwei Klärkammem 34 und 36 mit je einem Viertel des Volumens des Behälters unterteilt. Durchlässe 38 und 40 ermöglichen einen Strom des Abwassers von der Absetzkammer zu der ersten und zweiten Klärkammer 34,36. Ein Zulauf 42 tritt in die Absetzkammer 32 ein. Ein Auslaß, der als Überlauf ausgebildet ist, gibt das Abwasser an den nachgeschalteten Tropfkörperbehälter 12 ab. Der Auslaß umfaßt ein nicht im einzelnen bezeichnetes Rohr, dem ein offenes Tauchrohr 46 vorgeschaltet ist, so dass kein Oberflächenwasser abgegeben wird, das unter Umständen schwimmende Schmutzbestandteile enthalten kann.

Im Tropfkörperbehälter 12 befindet sich ein konzentrisch angeordneter Innenring 48, durch den im Zusammenwirken mit den Außenwänden des Tropfkörperbehälters ein Ringraum gebildet wird, in dem sich ein Tropfkörper 50, der auch als Filterkörper bezeichnet werden kann, befindet. Der Innenring 48 besteht ebenfalls aus aufeinandergesetzten Betonringen 52,54,56.

Der untere Betonring 52 verläuft kegelförmig nach außen und bildet zusammen mit einem weiteren, entlang der Innenwand des Tropfkörperbehälters verlaufenden Ring 58 einen wasserdurchlässigen Boden, durch den das über den Tropfkörper herabrieselnde Wasser zum Sumpf 60 des Tropfkörperbehälters gelangen kann.

Im Sumpf 60 des Tropfkörperbehälters befindet sich eine Tauchpumpe 62 mit einem Schwimmerschalter 64. Von der Tauchpumpe 62 geht eine Steigleitung 66 aus. Diese Steigleitung tritt unterhalb des Domes 26 des Tropfkörperbehälters 12 in eine waagerechte Verteilerleitung 68 ein, die das aufsteigende Abwasser zum Teil in der Mitte des Tropfkörperbehälters auf einen Verteilerteller 70 und zum Teil - radial außerhalb in ein zum Auslaß führendes Rohr 72 abgibt. Von dem Verteilerteller 70 wird das Wasser im Bogen nach allen Seiten verteilt, so dass es teilweise direkt auf den Tropfkörper 50 auftrifft, teilweise in einer oben auf dem Innenring angeordneten Verteilerrinne 74 aufgenommen wird, von der im Umfang verteilte Tropfrinnen 76 ausgehen, die auch das in der Verteilerrinne 74 gesammelte Wasser auf den Tropfkörper überführen. Die Verteilerrinne 74 ist üblicherweise bei herkömmlichen Systemen vorgesehen und dient in erster Linie zur Aufnahme des zuströmenden Abwassers, das im oberen Bereich des Klärbehälters eingeleitet wird. Da dies erfindungsgemäß im unteren Bereich geschieht, kann die Verteilerrinne 74 gemäß der vorliegenden Erfindung entfallen. Dadurch ergibt sich eine nicht unerhebliche Vereinfachung des Gesamtaufbaus, und die Zugänglichkeit zum Pumpensumpf wird verbessert.

Vom Bereich des Sumpfes 60 geht im übrigen außerhalb des Tropfkörperbehälters 12 ein senkrecht aufsteigendes Entlüftungsrohr 77 aus, das oberhalb der Erdoberfläche austritt.

Auf dem Boden 20 des Tropfkörperbehälters befindet sich im übrigen eine ringförmige Trennwand 78 oder ein entsprechend ausgebildeter Behälter, in dem sich die Tauchpumpe 62 befindet. In dieser kreisförmigen Trennwand befinden sich relativ kleine, nicht dargestellte Bohrungen, durch die das im Sumpf gesammelte Abwasser mit Verzögerung eintreten kann. Dies führt im Ergebnis dazu, dass die Tauchpumpe 62 jeweils nur begrenzte Wasserportionen hochpumpt, so dass nur begrenzte Mengen des Abwassers auf den Tropfkörper gelangen.

Die Trennwand 78 kann auch vollständig geschlossen sein, so dass das Wasser aus dem umgebenden Sumpf nur über den oberen Rand überlaufen kann.

Ohne eine derartige Abgrenzung einer relativ kleinen Wassermenge wird bei Erreichen eines bestimmten Füllstandes jeweils im wesentlichen die gesamte Wassermenge im Sumpf des Behälters abgepumpt. Übliche Tauchpumpen mit Schwimmerschalter arbeiten mit einer erheblichen Hysterese, d. h., die Pumpe wird bei einem wesentlich höheren Wasserstand eingeschaltet als ausgeschaltet. Auf diese Weise wird verhindert, dass die Pumpe ständig ein- und ausgeschaltet wird. Andererseits bedeutet dies, dass bei jedem Einschalten eine relativ große Wassermenge abgepumpt wird, bevor die Pumpe wieder ausschaltet.

Es hat sich nämlich gezeigt, dass bei der üblichen Anordnung der Tauchpumpe im Sumpf jeweils das gesamte im Sumpf gesammelte Abwasser in einem Zuge auf den Tropfkörper gepumpt wird. Diese erhebliche Wassermenge läuft zu einem erheblichen Anteil direkt durch den Tropfkörper hindurch, ohne die in diesem Bereich erwünschten Verweilzeiten einzuhalten. Die ringförmige Trennwand ermöglicht es dagegen, jeweils relativ begrenzte Mengen des Abwassers in zeitlichen Abständen auf den Tropfkörper zu pumpen.

Fig. 1 läßt schließlich erkennen, dass der Tropfkörperbehälter 12 erheblich höher angeordnet ist als der Klärbehälter 10. Diese Möglichkeit wird gegenüber herkömmlichen Anlagen dadurch geschaffen, dass der im oberen Bereich des Klärbehälters 10, der als Überlauf ausgebildet ist und folglich nur in diesem oberen Bereich angeordnet sein kann, durch eine Rohrleitung 80 direkt mit einem Einlaß 82 im Bereich des Sumpfes des Tropfkörperbehälters verbunden ist.

Selbstverständlich kann der Höhenunterschied zwischen den beiden Behältern 10,12 auch geringer sein, als es in Fig. 1 gezeigt ist. Fig. 1 zeigt die höchstmögliche Position des Tropfkörperbehälters. Wie die Anordnung im einzelnen getroffen wird, richtet sich nach den örtlichen Geländeverhältnissen.

In der Praxis wird es in der Regel möglich sein, beide Behälter in der gleichen Höhe zu montieren. In diesem Fall kann ebenfalls eine Verbindung zwischen dem Auslaß des Klärbehälters und dem im unteren Bereich liegenden Einlaß des Tropfkörperbehälters hergestellt werden.

## Patentansprüche

1. Biologische Kläranlage mit wenigstens einem Klärbehälter (10) und einem stromabwärts eines als Überlauf ausgebildeten Auslasses (44) des Klärbehälters (10) angeordneten Tropfkörperbehälter (12), der einen Tropfkörper (50) sowie eine Pumpe (62) enthält, die das zu klärende Abwasser vom Sumpf (60) des Tropfkörperbehälters (12) zurückführt, teilweise einem Auslaß zuführt, **dadurch gekennzeichnet, dass** der Auslaß (44) des Klärbehälters über eine Leitung (80) mit einem Einlaß (82) im Bereich des Sumpfes (60) des Tropfkörperbehälters verbunden ist.

2. Biologische Kläranlage nach Anspruch 1, **dadurch gekennzeichnet, dass** sich die Pumpe (62) am Boden (20) des Tropfkörperbehälters innerhalb einer Trennwand (78) befindet, die über Durchlässe geringen Durchmessers mit dem umgebenden Sumpf (60) verbunden ist.

3. Verfahren zur Herstellung einer biologischen Kläranlage mit wenigstens einem Klärbehälter (10) und einem stromabwärts eines als Überlauf ausgebildeten Auslasses (44) des Klärbehälters angeordneten Tropfkörperbehälter (12), der einen Tropfkörper (50) sowie eine Pumpe (62) enthält, die das zu klärende Abwasser vom Sumpf (60) zum oberen Bereich des Tropfkörperbehälters (12) anhebt und wenigstens teilweise auf den Tropfkörper (50) zurückführt, teilweise einem Auslaß zuführt, **dadurch gekennzeichnet, dass** zwischen einem im oberen Bereich des Klärbehälters (10) liegenden Auslaß (44) des Klärbehälters und einem im unteren Bereich des Tropfkörperbehälters liegenden Einlaß (82) eine Rohrverbindung hergestellt wird.

4. Verfahren nach Anspruch 3, **dadurch gekennzeichnet, dass** der Tropfkörperbehälter (12) im Verhältnis zu dem Klärbehälter (10) derart angeordnet wird, dass der untere Bereich des Tropfkörperbehälters (12) höher liegt als der untere Bereich des Klärbehälters (10).
